Europäisches Patentamt

European Patent Office

Office européen des brevets

(19)

(11) Veröffentlichungsnummer: **0 088 324**
**A1**

(12) **EUROPÄISCHE PATENTANMELDUNG**

(21) Anmeldenummer: **83101934.4**

(22) Anmeldetag: **28.02.83**

(51) Int. Cl.³: **B 62 D 25/16**

(30) Priorität: **09.03.82 DE 3208328**

(43) Veröffentlichungstag der Anmeldung: **14.09.83**
**Patentblatt 83/37**

(84) Benannte Vertragsstaaten: **DE FR GB IT NL SE**

(71) Anmelder: **BASF Aktiengesellschaft,**
**Carl-Bosch-Strasse 38, D-6700 Ludwigshafen (DE)**

(72) Erfinder: **Buehrle, Hans, An der Froschlache 23,**
**D-6700 Ludwigshafen (DE)**
Erfinder: **Lindner, Edmund, Edenkobener Strasse 9,**
**D-6700 Ludwigshafen (DE)**
Erfinder: **Lohrbaecher, Volker, Kisslichstrasse 1,**
**D-6940 Weinheim (DE)**

(54) **Radschutz (Kotflügel) aus thermoplastischem Kunststoff.**

(57) Als Hohlkörper ausgebildeter Radschutz (Kotflügel) aus thermoplastischem Kunststoff.

Radschutz (Kotflügel) aus thermoplastischem Kunststoff

Die vorliegende Erfindung betrifft einen Radschutz (Kotflügel) aus thermoplastischem Kunststoff.

Bei seiner Hauptaufgabe, nämlich das Abschleudern von Schmutz von den Rädern eines Fahrzeuges zu verhindern, ist der Radschutz (Kotflügel, Schmutzfänger) verschiedenen Beanspruchungen ausgesetzt; ferner ergeben sich aus dem Betrieb des Fahrzeuges Anforderungen, die er zusätzlich erfüllen muß. Er soll

- das Fahrzeugrad bis zu einem gewissen Grad abdecken. Dabei soll er durch vom Rad abgeschleuderten Schmutz oder durch Steinschlag nicht beschädigt werden. Er muß also durchschlag- und abriebfest sein.

- durch vom Fahrbetrieb oder von der Antriebsmaschine ausgehende Schwingungen nicht in Resonanzschwingungen versetzt werden. Er muß daher eine große Formsteifigkeit haben und aus einem Baustoff mit hoher Eigendämpfung bestehen.

- durch von außen einwirkende Schlag- und Stoßbeanspruchungen nicht brechen oder reißen und sich auch nicht bleibend verformen.

- keine scharfen Kanten oder Ecken haben, die andere Verkehrsteilnehmer gefährden.

- möglichst selbsttragend sein, um aufwendige Trag- und Versteifungskonstruktionen zu vermeiden.

Spr/P

0088324

- zusätzliche Funktionsaufgaben erfüllen, wie z.B. Aufnahme von Sturäumen für Bordwerkzeug, Handlampen, Schneeketten usw., oder die Aufnahme technischer Funktionsteile, wie Lampen und Nummernschilder.

- auf der dem Rad zugewendeten Fläche keine rippenförmigen Versteifungen haben, an denen sich Schmutz oder Schnee festsetzen kann.

- korrosionsfest sein, so daß an durch Kratzer verletzten Stellen kein korrosiver Angriff durch Feuchtigkeit, gegebenenfalls in Verbindung mit Streusalz, erfolgt.

- möglichst einfach herzustellen sein und deshalb möglichst aus einem einzigen Stück bestehen.

Die bekannten Radschutzteile aus Stahl oder Leichtmetall erfüllen diese Forderungen nur unvollkommen wegen ihrer bekannten Korrosionsanfälligkeit, mangelnden Rückverformung bei von außen einwirkenden Stoßeinflüssen, Bildung scharfer Kanten und davon ausgehender Gefährdung anderer Verkehrsteilnehmer und eines hohen Fertigungsaufwandes, für den Einbau von Sturäumen bzw. Aufnahmemöglichkeiten für Anbauteile.

Bekannte Radschutzteile aus glasfaserverstärkten, duroplastischen Kunststoffen (GFP) sind zwar korrosionsfest, aber einwandig ausgeführt, so daß sie nur eine vergleichsweise niedrige Eigensteifigkeit haben.

Spritzgegossene Radschutzteile aus thermoplastischen Kunststoffen benötigen zu ihrer Herstellung vergleichsweise teuere und aufwendige Werkzeuge, so daß sich ihre Herstellung nur bei entsprechend großen Stückzahlen lohnt.

Sollen sie eine besonders hohe Steifigkeit haben, so müssen sie verrippt werden was zur Bildung von Schmutzecken führt.

Somit bestand die Aufgabe, einen Radschutz zu schaffen mit folgenden Eigenschaften:

Verschleißfest gegen vom Rad abgeschleuderte Steine und Splitt;

Schwingungssteif mit hoher Eigendämpfung;
Unempfindlichkeit gegen Einwirkung äußerer Stöße;
Hohes Rückstellvermögen bei erlittenen Verformungen;
Keine scharfen Ecken oder Kanten;
Selbsttragende Bauweise;
Aufnahme von Stauräumen und technischen Funktionsteilen;
Glatte Flächen zur Vermeidung von Schmutzablagerungen;
Korrosionsfestigkeit;
Leichte Herstellbarkeit.

Erfindungsgemäß wurde diese Aufgabe dadurch gelöst, daß der Radschutz aus thermoplastischem Kunststoff als Hohlkörper ausgebildet ist. Vorteilhafte Weiterbildungen der Erfindung sind Gegenstand der Unteransprüche.

Zur Herstellung des erfindungsgemäßen Radschutzes eignen sich das Blasformverfahren, das Doppelstreckziehverfahren, das Rotationssintern oder das Rotationsgießen.

Als Kunststoffe eignen sich für die Herstellung im Blasformverfahren vor allem die Polymerisate des Ethylens, des Propylens und seine Modifikationen zur Erhöhung der Kältezähigkeit, Polyamid, Polycarbonat, Styrolpolymerisate und Polyurethan.

Beim Doppelstreckziehen kommt als Ausgangsmaterial vorwiegend plattenförmiges Halbzeug aus Styrolpolymerisaten, Polyethylen und Polypropylen in Frage, während beim Rotationssintern vorwiegend von Pulver aus Polyethylen und beim Rotationsgießen von Caprolactam ausgegangen wird.

Alle diese Werkstoffe haben mehr oder weniger stark ausgeprägt die gewünschten Eigenschaften bezüglich Korrosionsfestigkeit, Rückstellvermögen, Verschleißfestigkeit, hoher Eigendämpfung und Stoßfestigkeit.

Die Hohlkörperbauweise begünstigt von Natur aus die im vorliegenden Fall notwendige Abrundung von Ecken und Kanten.

Die Forderung nach hoher Schwingungssteifigkeit wird dadurch erfüllt, daß der Radschutz als Hohlkörper ausgeführt wird, mit im wesentlichen kastenförmigen Querschnitten, die infolge ihres hohen Trägheitsmomentes der Gesamtkonstruktion eine hohe Biegesteifigkeit verleihen. Die kastenförmige Bauart begünstigt auch eine hohe Eigentragfähigkeit, so daß besondere Versteifungskonstruktionen überflüssig werden. Als weiterer Vorteil der kastenförmigen Bauart ergibt sich die Möglichkeit, im Bauteil Stauräume und Aufnahmemulden für betriebstechnisch notwendige Anbauteile anzubringen.

Anhand der Zeichnungen sind die Merkmale des Radschutzes beispielhaft dargestellt.

Figur 1 zeigt die perspektivische Ansicht eines erfindungsgemäßen Radschutzes, beispielsweise für einen Schlepper. Figur 2 ist der Längsschnitt durch den Radschutz nach Schnitt C-C in Figur 1.

0088324

Figur 3 ist ein Querschnitt durch den Radschutz nach Schnitt A-A in Figur 1.

Figur 4 ist ein Querschnitt durch den Radschutz nach Schnitt B-B in Figur 1.

Figur 5, 6 und 11 sind besondere Ausführungsdetails, dargestellt an weiteren Querschnitten durch den Radschutz.

Figur 7 ist ein Ausschnitt aus dem Längsschnitt nach Figur 2 mit einer besonderen Ausführung des Befestigungsauges.

Figur 8 bis 10 zeigen Varianten des Befestigungsauges, dargestellt in Querschnitten entsprechend Schnitt D-D in Figur 7.

Der Radschutz 1 besteht im wesentlichen aus einem Hohlkörper mit kastenförmigen Querschnitten. Der Körper wird aus zwei Seitenwänden 2 und 3, aus einer dem Rad zugekehrten Innenwand 4 und einer gegebenenfalls aus mehreren verschiedenen Einzelflächen bestehenden Oberseite 5 gebildet. In die Oberseite 5 können Vertiefungen 6, 7 eingebracht sein, die als Stauräume oder zur Aufnahme von fahrzeugtechnisch bedingten Teilen, wie z.B. Beleuchtungseinrichtungen, Kennzeichen, dienen. Der Radschutz liegt mit einer seiner Seitenflächen 2 oder mit seiner Oberseite 3 an dem Fahrzeug an, wo er befestigt ist.

Befestigungsaugen 8 dienen zur Aufnahme der Befestigungselemente (z.B. Bolzen) zum Befestigen des Radschutzes am Fahrzeug.

Zum Erhöhen der Steifigkeit des Radschutzes können Verbindungen zwischen der Innenwand 4 und der Oberseite 5 hergestellt werden. Das geschieht entweder durch muldenförmige Eindrückungen 9 an der Innenwand 4 (Figur 6) oder durch ähnliche Eindrückungen 10 an der Oberseite 5 (Figur 5). Auch die Bodenflächen 11 der Vertiefungen 6

0088324

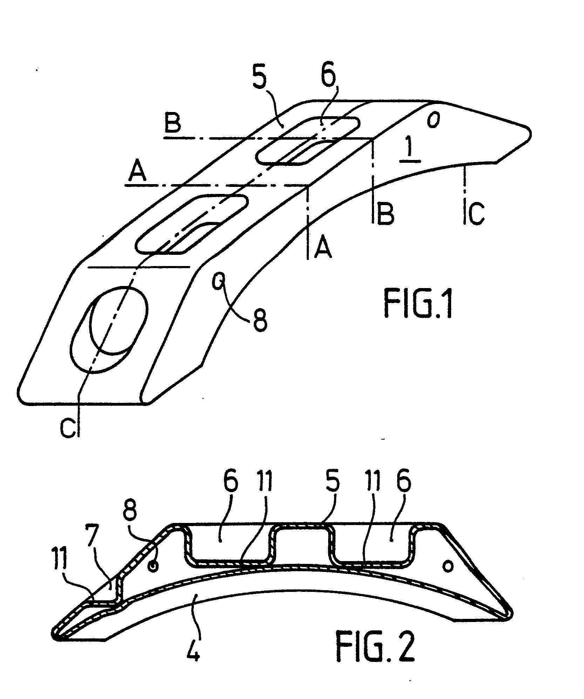

oder 7 können so tief angeordnet werden, daß sie die gewünschte Verbindung zur Innenwand 4 herstellen (Figur 2). Eine weitere Möglichkeit, die Steifigkeit des Radschutzes zu erhöhen, ist durch teilweises Ausfüllen seines Hohlraumes, beispielsweise durch Ausschäumen gegeben.

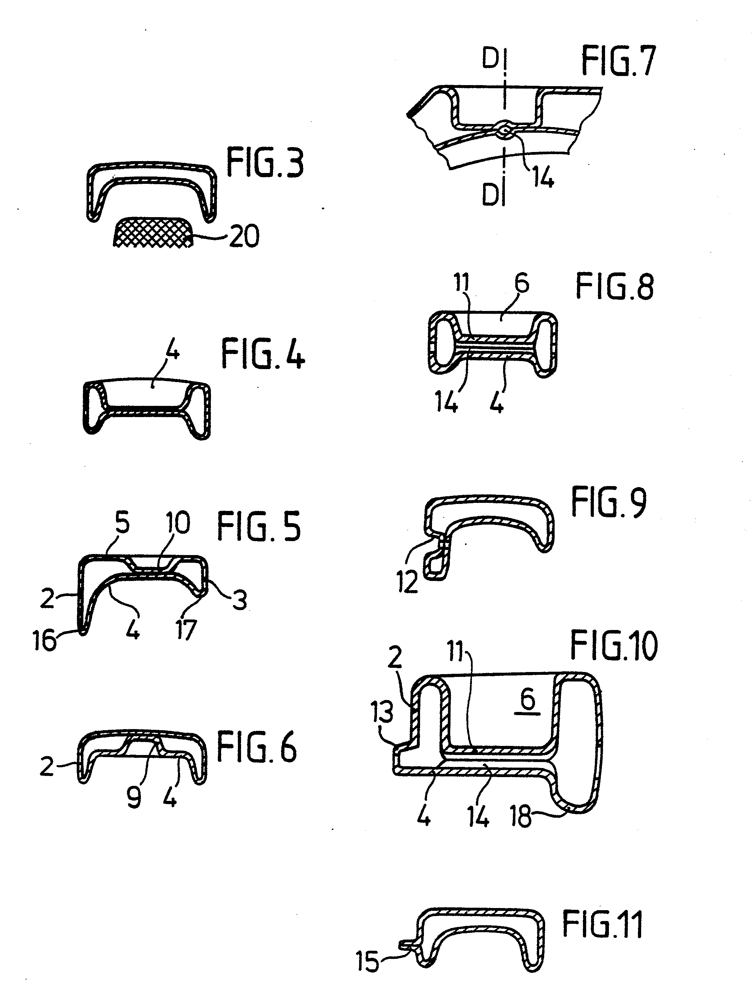

An der mit dem Fahrzeug in Berührung stehenden Fläche 2 des Radschutzes können Vertiefungen 12 (Figur 9) oder Vorsprünge 13 (Figur 10) angebracht sein, die in entsprechende Vorsprünge bzw. Ausnehmungen am Fahrzeug eingreifen und in Verbindung mit bekannten Befestigungselementen einen sicheren Halt am Fahrzeug gewährleisten.

Eine Befestigungsmöglichkeit, die eine besonders gute Krafteinleitung ergibt, zeigt Figur 7 in Verbindung mit einer Detailausführung nach Figur 8 bzw. Figur 10. Hier ist in Verbindung zwischen Innenwand 4 und Boden 11 einer muldenförmigen Vertiefung 6 ein rohrförmiger Durchbruch 14 ausgespart, der einen nicht näher dargestellten Bolzen zum Befestigen des Radschutzes am Fahrzeug aufnimmt.

Nach Figur 11 kann zum Befestigen des Radschutzes am Fahrzeug auch ein seitlich liegender Flansch 15 dienen.

Der Querschnitt des Radschutzes kann, je nach den fahrzeugtechnischen Gegebenheiten entweder das Rad 20 zu beiden Seiten gleich weit andecken (Figur 3) oder ungleich lange Schenkel 16, 17 (Figur 5) oder nur einen Schenkel 18 (Figur 10) haben.

0088324

Patentansprüche

1. Radschutz aus thermoplastischem Kunststoff, dadurch gekennzeichnet, daß er als Hohlkörper ausgebildet ist.

2. Radschutz nach Anspruch 1, dadurch gekennzeichnet, daß zwischen seiner Oberseite (5) und seiner Innenwand (4) durch muldenförmige Eindrückungen (9, 10) eine Verbindung besteht.

3. Radschutz nach Anspruch 1 und 2, dadurch gekennzeichnet, daß an seiner Oberseite (5) Vertiefungen (6, 7) angebracht sind.

4. Radschutz nach Anspruch 1 bis 3, dadurch gekennzeichnet, daß zwischen den Bodenflächen (11) der Vertiefungen (6, 7) eine Verbindung zur Innenwand (4) besteht.

5. Radschutz nach Anspruch 1 bis 4, dadurch gekennzeichnet, daß in der Verbindung zwischen der Innenwand (4) und dem Boden (11) der Vertiefungen (6, 7) ein rohrförmiger Durchbruch (14) ausgespart ist.

6. Radschutz nach Anspruch 1 bis 5, dadurch gekennzeichnet, daß an einer mit dem Fahrzeug in Berührung stehenden Fläche (2) Vertiefungen (12) oder Vorsprünge (13) angebracht sind, die in entpsrechende Vorsprünge bzw. Ausnehmungen am Fahrzeug eingreifen.

7. Radschutz nach Anspruch 1 bis 6, dadurch gekennzeichnet, daß an der Seitenwand (2) ein Flansch (15) angeordnet ist.

0088324

8. Radschutz nach Anspruch 1 bis 7, dadurch gekennzeichnet, daß sein Querschnitt das Rad (20) zu beiden Seiten gleich weit umgreift.

9. Radschutz nach Anspruch 1 bis 7, dadurch gekennzeichnet, daß die beiden das Rad (20) abdeckenden Schenkel (16, 17) seines Querschnitts ungleich lang sind.

10. Radschutz nach Anspruch 1 bis 7, dadurch gekennzeichnet, daß der Querschnitt nur einen das Rad (20) seitlich abdeckenden Schenkel (18) hat.

11. Radschutz nach Anspruch 1 bis 10, dadurch gekennzeichnet, daß der Hohlraum ganz oder teilweise gefüllt, beispielsweise ausgeschäumt ist.

Zeichn.

0088324

½

5  6

B

A

1

B

C

0

A

8

C

**FIG.1**

6 11  5 11 6

8

7

11

4

**FIG.2**

0088324

²/₂

FIG.3

FIG.4

FIG.5

FIG.6

FIG.7

FIG.8

FIG.9

FIG.10

FIG.11

Europäisches
Patentamt

**EUROPÄISCHER RECHERCHENBERICHT**

0088324

Nummer der Anmeldung

EP 83 10 1934

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-U-7 737 162 (REISS INTERNATIONAL GmbH) * Figur 1; Anspruch 1 * | 1,7-9, 11 | B 62 D 25/16 |
| X | GB-A- 438 142 (A. HUTCHISON) * Figuren 1-3; Anspruch 1 * | 1,2,11 | |
| X | DE-A-1 555 288 (GEBR. EICHET) * Anspruch 1; Seite 1, Absatz 1 - Seite 2, Absatz 3 * | 1,11 | |
| A | FR-A-2 082 354 (FICHET) * Figuren 1-4 * | 3 | |
| A | DE-B-1 192 936 (DAIMLER-BENZ AG) * Figuren 1-4 * | 6,7,9, 10 | RECHERCHIERTE SACHGEBIETE (Int. Cl. 3) |
| A | EP-A-0 041 353 (TALBOT MOTOR COMPANY LTD.) * Figur 3 * | 6 | B 62 D |

Der vorliegende Recherchenbericht wurde für alle Patentansprüche erstellt.

| Recherchenort DEN HAAG | Abschlußdatum der Recherche 09-06-1983 | Prüfer SCHMITTER J.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82